# EUROPÄISCHE PATENTSCHRIFT

(11) **EP 2 354 377 B1**
(45) Veröffentlichungstag und Bekanntmachung des Hinweises auf die Patenterteilung: **10.04.2019**
(21) Anmeldenummer: 11000797.8
(22) Anmeldetag: 01.02.2011
(51) Int. Cl.: E04H 4/06, E04H 4/08, A01M 29/32, B65D 88/36, E02B 3/00

(54) **SCHWIMMFÄHIGER TECHNISCHER HOHLKÖRPER UND VERFAHREN ZU DESSEN HERSTELLUNG**
FLOATING TECHNICAL HOLLOW BODY AND METHOD FOR ITS PRODUCTION
CORPS CREUX TECHNIQUE POUVANT FLOTTER ET SON PROCÉDÉ DE FABRICATION

(30) Priorität: 02.02.2010 DE 102010006592; 02.02.2010 US 300680 P
(43) Veröffentlichungstag der Anmeldung: 10.08.2011
(73) Patentinhaber: Weener Plastik GmbH, 26826 Weener (DE)
(72) Erfinder: Flockenhagen, Gerhold, 26826 Weener-Kirchborgum (DE)
(74) Vertreter: Wallinger, Michael

(56) Entgegenhaltungen:
- WO-A1-2006/010204
- JP-A- 2000 319 952

## Beschreibung

Die vorliegende Erfindung betrifft einen schwimmfähigen technischen Hohlkörper, insbesondere zum Abdecken offener Wasserflächen gegen Vögel, nach dem Oberbegriff des Anspruchs 1 sowie ein Verfahren zu dessen Herstellung.

Insbesondere in der Nähe von Flughäfen sind häufig sogenannte Löschteiche vorgesehen, um im Brandfall rasch große Wassermengen zur Verfügung stellen zu können. Dabei besteht die Gefahr, dass Vögel auf solchen offenen Wasserflächen schwimmen oder nisten. Dies kann nicht nur zu einer Verschmutzung des Löschwassers, sondern im Brandfall zum Ansaugen der Vögel durch Löschpumpen führen. Zudem ist ein Nisten von Vögeln in Flughafennähe wegen der Gefahr des Vogelschlags generell unerwünscht.

Daher ist es bekannt, solche Löschteiche im Wesentlichen vollständig mit schwimmenden technischen Hohlkugeln zu bedecken, die die Wasseroberfläche gegen die Vögel tarnen und deren Landung und Verbleib auf der Wasseroberfläche erschweren oder verhindern. Eine solche Anordnung von schwimmfähigen technischen Hohlkörpern kann auch für andere offene Flüssigkeitsflächen, beispielsweise zum Schutz oder zur Isolierung von Freibädern, Klärbecken, offenen Tanks und dergleichen verwendet werden.

Die Offenlegungsschrift JP 2000 319952 A offenbart schwimmfähige Hohlkörper, welche durch Verbindung eines Oberteils mit einem Unterteil gebildet werden, wobei das Oberteil und das Unterteil jeweils in der Mitte eine Öffnung zur Befüllung mit Wasser aufweisen. Die Öffnung in dem Oberteil kann bei einem entsprechenden Füllstand mittels einer schwimmenden Kugel verschlossen werden. Die Offenlegungsschrift WO 2006/010204 A1 offenbart schwimmfähige Module zur Wasserspeicherung, welche durch zwei miteinander verbindbare Schalenteile gebildet werden, wobei in mittleren Bereichen des unteren Schalenteiles Wasserdurchlasslöcher angebracht sind.

Hierzu werden bisher nach betriebsinterner Praxis Hohlkugeln, aus Kunststoff hergestellt. Anschließend wird eine Bohrung zum Kugelinneren hergestellt, durch diese das Kugelinnere mit einer vorgegebenen Trinkwassermenge, beispielsweise zu einem bis zwei Dritteln, befüllt, und die Bohrung anschließend durch einen Stopfen wieder verschlossen.

Dies erfordert nicht nur aufgrund der Anzahl der einzelnen Fertigungsschritte einen hohen Fertigungsaufwand, sondern bedingt aufgrund des bereits bei der Herstellung eingefüllten Trinkwassers nachteilig ein hohes Transportgewicht der Kugeln.

Aufgabe der vorliegenden Erfindung ist es, einen verbesserten schwimmfähigen technischen Hohlkörper zur Verfügung zu stellen.

Diese Aufgabe wird für einen schwimmfähigen technischen Hohlkörper nach dem Oberbegriff des Anspruchs 1 mit der Merkmalskombination des Kennzeichens des Anspruchs 1 gelöst. Vorteilhafte Weiterbildungen sind Gegenstand der Unteransprüche.

Ein erfindungsgemäßer schwimmfähiger technischer Hohlkörper kann beispielsweise zum Abdecken offener Flüssigkeitsflächen, insbesondere Wasserflächen gegen Vögel, verwendet werden.

Er weist eine hohle Schale auf, die durch zwei oder mehr miteinander verbundene Schalenteile gebildet wird. Die Schale weist eine oder mehrere, vorzugsweise wenigstens im Wesentlichen äquidistant verteilte, Öffnungen zur Befüllung des Schaleninneren mit Flüssigkeit, insbesondere Wasser, auf. Im Schaleninneren sind ein oder mehrere fluid-, insbesondere luftdichte Innenhohlkörper angeordnet.

Durch die Öffnung(en) in der Schale und den bzw. die Innenhohlkörper kann ein erfindungsgemäßer Hohlkörper vorteilhafterweise unbefüllt vorgefertigt und transportiert werden. Durch die Öffnung(en) kann er dann insbesondere vor Ort durch Platzieren auf der offenen Flüssigkeitsfläche selbstfüllend Flüssigkeit aufnehmen, wobei der erforderliche Auftrieb durch den bzw. die Innenhohlraumkörper bewirkt wird. Zudem kann der Fertigungsaufwand in vorteilhafter Weise reduziert werden, insbesondere, wenn die Öffnung(en) in einer bevorzugten Ausführung in einem oder mehreren Schalenteilen mit diesen zusammen urgeformt werden.

Um den Fertigungsaufwand weiter zu reduzieren, sind in einer bevorzugten Ausführung zwei oder mehr, insbesondere alle miteinander verbundenen Schalenteilen identisch oder im Wesentlichen identisch ausgebildet. Dies kann es insbesondere ermöglichen, zwei oder mehr Schalenteile mit demselben Werkzeug ur- und/oder umzuformen.

Schalenteile können lösbar oder unlösbar miteinander verbunden werden. Sie können beispielsweise stoffschlüssig, etwa durch Verkleben oder Verschweißen verbunden werden, formschlüssig, etwa durch einander hintergreifende Rastvorsprünge und Aussparungen bzw. Öffnungen, und/oder kraft-, insbesondere reibschlüssig, etwa durch Presspassungen oder dergleichen. In einer bevorzugten Ausführung sind zwei Schalenteile mittels einer oder mehrerer Rastverbindung verbunden, die dann vorzugsweise äquidistant über einen Umfang der Schalenteile verteilt sind.

Indem eine durchgehende Aussparung, in die ein Rastvorsprung einer Rastverbindung eingreift, entsprechend größer ausgebildet ist, kann eine Rastverbindung zugleich eine Öffnung zur Befüllung des Schaleninneren mit Flüssigkeit bilden.

Ist ein Innenhohlkörper separat ausgebildet, kann dieser vor dem Verbinden der Schalenteile miteinander in diese eingebracht, beispielsweise eingelegt werden. Vorzugsweise wird er an der Schale derart festgelegt, dass er nur begrenzte, vorzugsweise kleine, Relativbewegungen ausführen kann oder wenigstens im Wesentlichen starr an dieser fixiert ist. Hierzu können innenseitig an der Schale und/oder außenseitig am Innenholkörper ein oder mehrere, bevorzugt wenigstens im Wesentlichen hohlzylinderförmige, Vorsprünge ausgebildet sein, wobei ein solcher Vorsprung in einer bevorzugten Ausführung integral mit der Schale bzw. dem Innenhohlkörper hergestellt, insbesondere urgeformt sein kann.

In einer bevorzugten Ausführung wird ein Innenkörper ein- oder mehrseitig durch jeweils zwei, drei oder mehr voneinander beanstandete Vorsprünge festgelegt, wobei Zwischenräume zwischen den voneinander beanstandeten Vorsprünge eine Durchströmung und/oder eine Verformung der Vorsprünge ermöglichen können, um beispielsweise unterschiedliche thermische Ausdehnungen von Schale, Innenhohlkörper und/oder eingefüllter Flüssigkeit zu kompensieren, insbesondere einem Eisdruck bei Gefrieren der eingefüllten Flüssigkeit nachzugeben.

Zusätzlich oder alternativ kann ein Innenhohlkörper integral mit der Schale ausgebildet sein. Insbesondere können hierzu zwei oder mehr miteinander verbundene Schalenteile innenseitig entsprechende, beispielsweise hohlzylinderförmige, Vorsprünge aufweisen, die bei miteinander verbundenen Schalenteile gemeinsam den Innenhohlkörper definieren. Wie die Schalenteile können auch diese Vorsprünge lösbar oder unlösbar miteinander verbunden werden. Sie können also beispielsweise stoffschlüssig, etwa durch Verkleben oder Verschweißen verbunden werden, formschlüssig, etwa durch einander hintergreifende Rastvorsprünge und Aussparungen, und/oder kraft-, insbesondere reibschlüssig, etwa durch Presspassungen oder dergleichen. Es kann vorteilhaft sein, zwischen den Vorsprüngen, die einen Innenhohlkörper bilden, ein Dicht- und/oder Klebemittel anzuordnen.

Vorzugsweise sind die Schale und/oder der bzw. die Innenhohlkörper sphärisch oder im Wesentlichen sphärisch, i.e. hohlkugelförmig, ausgebildet. Eine solche kugelsymmetrische Ausbildung trägt zu einer optimalen, orientierungsfreien Abdeckung der Flüssigkeitsfläche bei. Gleichermaßen sind jedoch auch andere, vorzugsweise rotationssymmetrische, Schalen- und Innenhohlkörperformen möglich, beispielsweise zylinder-, kegel- oder quaderförmige.

In einer bevorzugten Ausführung sind die Schale und/oder ein oder mehrere Innenhohlkörper aus einem Kunststoff, insbesondere Polyethylen (PE) hergestellt. Die Schale weist vorzugsweise eine maximale Außenabmessung, beispielsweise einen Kugeldurchmesser, auf, der zwischen 3 cm und 15 cm, bevorzugt zwischen 5 cm und 10 cm liegt.

Vorteilhafterweise sind der bzw. die im Schaleninneren angeordnete(n) Innenhohlkörper und die Schale bezüglich ihrer Abmessung, Wandstärke, und Material sowie das in dem bzw. den Innenhohlkörper(n) eingeschlossene Fluid, vorzugsweise Luft, derart aufeinander abgestimmt, dass der Auftrieb des auf einer offenen Flüssigkeitsfläche schwimmenden Hohlkörpers in einem vorgegebenen Bereich liegt. Dieser ist vorzugsweise so gewählt, dass einerseits ein Verblasen des Hohlkörpers durch Wind oder dergleichen durch die Gewichtskraft des Hohlkörpers und der in ihm aufgenommenen Flüssigkeit verhindert oder zumindest erschwert wird, und andererseits so, dass Vögeln oder anderen abzuhaltenden Objekten ein ausreichender Widerstand entgegengesetzt wird.

Schalenteile können vorteilhafterweise durch Urformen hergestellt werden, insbesondere durch Streck- oder Spritzblasen, Extrudieren oder Spritzgießen. Zwei oder mehr Schalenteile können vorzugsweise miteinander auch vor Ort unmittelbar vor dem Platzieren auf der Flüssigkeitsfläche verbunden werden, indem die Teile beispielsweise miteinander unlösbar verrastet werden.

In einer bevorzugten Ausführung weist ein Hohlkörper eine oder mehrere, vorzugsweise einzeln, paar- oder gruppenweise äquidistant verteilte Verstärkungsrippen auf. Diese können an der Innen- und/oder Außenseite der Schale und/oder an Vorsprüngen zur Festlegung eines Innenhohlkörpers angeordnet, insbesondere integral, beispielsweise durch Urformen, damit ausgebildet sein. Vorzugsweise erstrecken sich Verstärkungsrippen eines Schalenteils über dessen Kontaktrand hinaus in den Bereich eines angrenzenden Schalenteiles und stützen sich bei zusammengesetzter Schale an dem angrenzenden Schalenteil ab, um so die Verbindung der Schalenteile zu verstärken.

Weitere Vorteile und Merkmale ergeben sich aus den Unteransprüchen und Ausführungsbeispielen. Hierzu zeigt, teilweise schematisiert:
- Fig. 1:: eine schwimmfähige technische Hohlkugel nach einer ersten Ausführung der vorliegenden Erfindung in perspektivischer Ansicht;
- Fig. 2:: eine Draufsicht auf die Hohlkugel nach Fig. 1;
- Fig. 3:: einen Schnitt längs der Linie III-III in Fig. 2;
- Fig. 4:: eine schwimmfähige technische Hohlkugel nach einer zweiten Ausführung der vorliegenden Erfindung in Fig. 3 entsprechender Darstellung;
- Fig. 5:: eine schwimmfähige technische Hohlkugel nach einer dritten Ausführung der vorliegenden Erfindung in Fig. 1 entsprechender Darstellung;
- Fig. 6:: ein Schalenteil der Hohlkugel nach Fig. 5 in perspektivischer Ansicht; und
- Fig. 7:: einen Querschnitt der Hohlkugel nach Fig. 5.

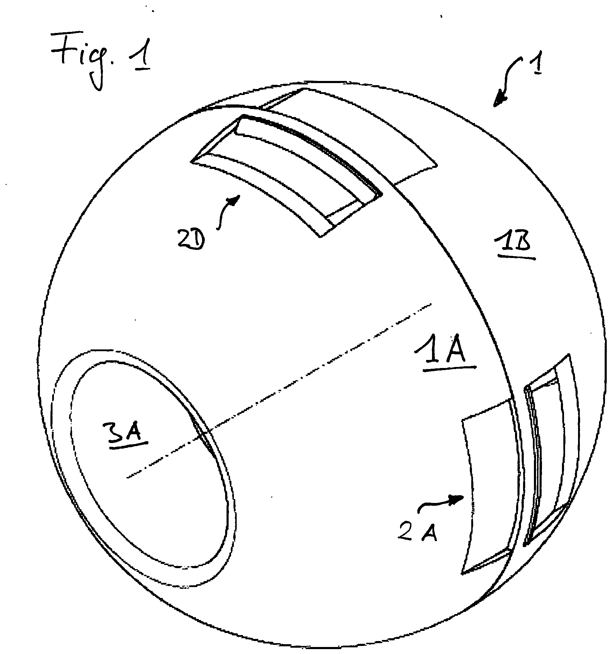

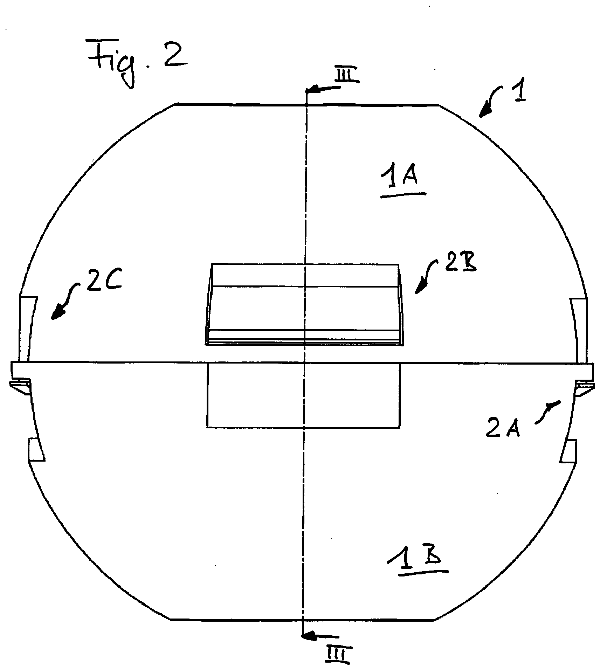

Die Fig. 1 bis 3 zeigen eine schwimmfähige technische Hohlkugel 1 nach einer ersten Ausführung der vorliegenden Erfindung.

Diese ist aus zwei Schalenteilen 1A, 1B zusammengesetzt, die miteinander über vier äquidistant beabstandete, um 90° gegeneinander versetzte Rastverbindungen 2A bis 2D unlösbar, i.e. nur werkstoffzerstörend verbunden sind. Jede Rastverbindung wird durch einen Rastvorsprung 2.1 gebildet, der eine entsprechende Aussparung bzw. Öffnung 2.2 im gegenüberliegenden Schalenteil form- und kraftschlüssig hintergreift.

Innenseitig sind in den Schalenteilen 1A, 1B, die durch Spritzgießen oder Streckblasen aus PE hergestellt werden, hohlzylinderförmige Vorsprünge 3A bzw. 3B angeformt, deren innenseitige, einander zugewandte Stirnseiten einander nicht berühren.

Zwischen den Vorsprüngen 3A, 3B der miteinander verrasteten Schalenteile 1A, 1B ist eine separat, beispielsweise durch Extrusions-, Streck- oder Spritzblasen, ausgebildete Innenhohlkugel 4 mit Spiel festgelegt, die hierzu vor dem Zusammenfügen der Schalenteile 1A, 1B in einen Vorsprung 3A bzw. 3B eingelegt wird. Die Innendurchmesser der Vorsprüngen 3A, 3B sind entsprechend geringfügig größer als der Aussendruchmesser der Innenhohlkugel 4 gewählt und zusätzlich in entsprechender Höhe durch eine Innenwand 3.1 verschlossen.

Die Innenhohlkugel 4 ist luftdicht ausgebildet und in ihrem Inneren mit Luft gefüllt. Die Aussparungen 2.2 sind so groß, dass auch bei geschlossener Rastverbindung eine Öffnung zum Kugelinneren verbleibt, durch die Wasser in dieses eintreten und Luft entweichen kann.

Die Kugel 1 wird durch Zusammenfügen der Schalenteile 1A, 1B mit eingelegter Innenhohlkugel 4 vorab vor dem Transport zu einem Flughafenlöschteich oder vor Ort fertiggestellt. Anschießend wird die Kugel 1 auf der Wasseroberfläche des Löschteichs platziert (nicht dargestellt). Durch die Öffnungen 2.2 füllt sie sich selbstständig mit Wasser. Dabei ist der Durchmesser der Innenhohlkugel 4 so auf ihr und das Gewicht der Schalenteile 1A, 1B und das in diesen aufgenommene Wasser abgestimmt, dass die Kugel 1 einen Auftrieb erfährt, der anlandenden Vögeln einen ausreichenden Widerstand entgegensetzt, andererseits aber so gering ist, dass die Kugel 1 durch übliche Windstärken nicht aus dem Löschteich geblasen wird.

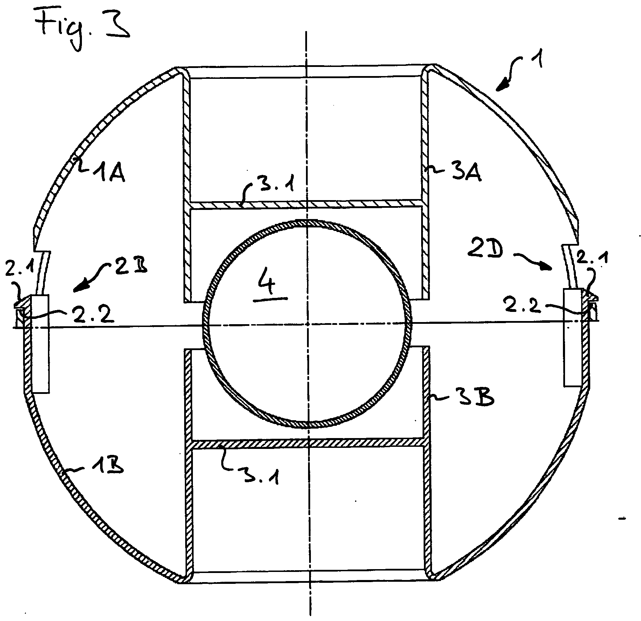

Man erkennt insbesondere im Schnitt der Fig. 3 die identische Ausbildung der beiden Schalenteile 1A, 1B, die jeweils zwei einander gegenüberliegende Rastvorsprünge 2.1 und zwei einander gegenüberliegende Aussparungen bzw. Öffnungen 2.2 aufweisen, so dass sie um 90° gegeneinander verdreht aufeinandergesetzt und miteinander verrastet werden können. Dies ermöglicht es, beide Schalenteile 1A, 1B kostengünstig mit dem selben Werkzeug herzustellen.

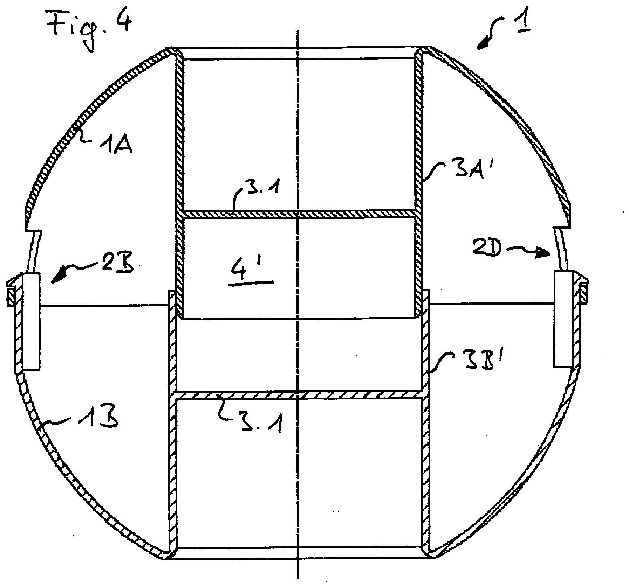

Fig. 4 zeigt in Fig. 3 entsprechender Darstellung eine schwimmfähige technische Hohlkugel nach einer zweiten Ausführung der vorliegenden Erfindung. Mit der ersten Ausführung übereinstimmende Merkmale sind durch identische Bezugszeichen bezeichnet, so dass nachfolgend nur auf die Unterschiede zu der im Übrigen übereinstimmenden ersten Ausführung eingegangen wird.

Bei der zweiten Ausführung ist an Stelle der separat ausgebildeten Innenhohlkugel 4 ein Innenhohlraum 4' durch die beiden hohlzylindeförmigen Vorsprünge 3A', 3B' integral mit den Schalenteilen 1A bzw. 1B ausgebildet, die hierzu in ihrem Inneren jeweils durch eine Innenwand 3.1 verschlossen sind und einander mit ihren einander zugewandten Stirnseiten luftdicht überlappen, so dass beim Zusammenfügen der beiden Schalenteile 1A, 1B der hohlzylinderförmige Innenhohlraum 4' gebildet und luftdicht verschlossen wird.

Hierzu kann der eine der beiden Vorsprünge 3A', 3B' stirnseitig einen Außendurchmesser aufweisen, der mit dem stirnseitigen Innendurchmesser des anderen der beiden Vorsprünge 3A', 3B' eine entsprechende Passung, insbesondere Presspassung bildet. Zusätzlich oder alternativ kann ein Dicht- und/oder Klebemittel zwischen beiden Vorsprüngen 3A', 3B' vorgesehen sein, welches in einer nicht dargestellten Abwandlung die Rastverbindungen 2A bis 2D ersetzen kann.

Gleichermaßen können anstelle unterschiedlicher Durchmesser die einander zugewandten Stirnseiten der beiden Vorsprünge 3A', 3B' in einer ebenfalls nicht dargestellten Abwandlung auch so flexibel ausgebildet sein, dass sie miteinander unter elastischer Deformation, i.e. Aufweitung des einen und Komprimierung des anderen, luftdicht verbunden werden, was wie bei der ersten Ausführung die Herstellung beider Schalenteile mit demselben Werkzeug ermöglicht.

Die Innendurchmesser der Vorsprünge 3A', 3B' und die Höhe, auf der die Innenwand 3.1 angeordnet ist, i.e. das Innenvolumen des Innenhohlraums 4' ist wiederum so gewählt, dass die selbstständig mit Wasser gefüllte Kugel 1 den gewünschten Auftrieb aufweist, um Vogelanlandung und Windverblasung gleichermaßen zu wiederstehen.

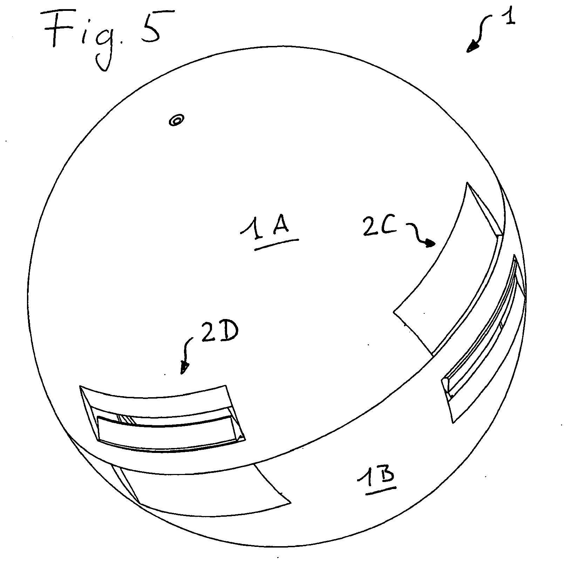

Fig. 5 bis 7 zeigen eine schwimmfähige technische Hohlkugel nach einer dritten Ausführung der vorliegenden Erfindung. Mit der ersten Ausführung übereinstimmende Merkmale sind wiederum durch identische Bezugszeichen bezeichnet, so dass nachfolgend nur auf die Unterschiede zu der im Übrigen übereinstimmenden ersten Ausführung eingegangen wird.

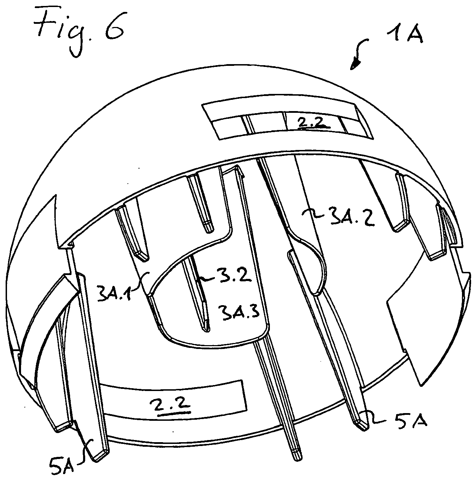

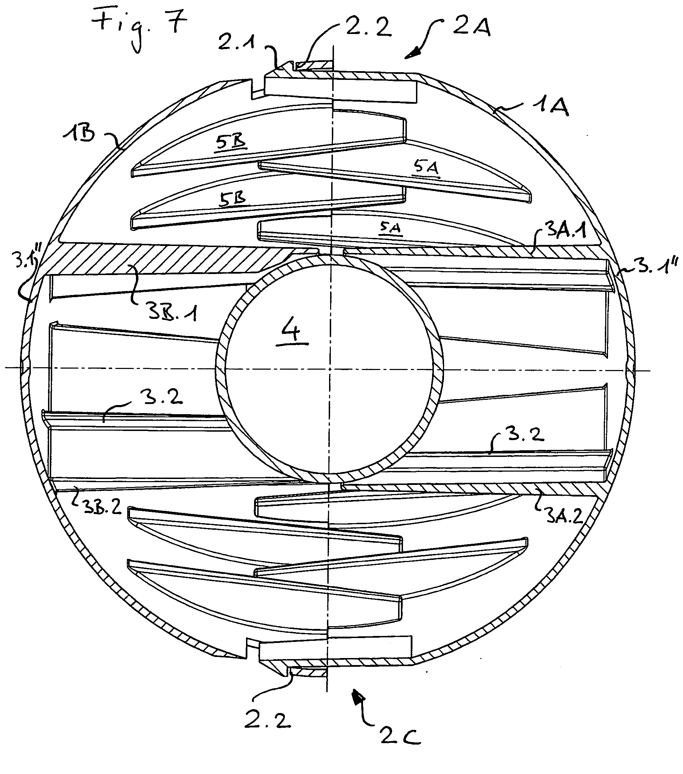

Man erkennt zum einen in den Fig. 6, 7, dass die beiden Schalenteile 1A, 1B je acht innenseitige Verstärkungsrippen 5A bzw. 5B aufweisen, die integral mit den Schalenteilen hergestellt werden und paarweise äquidistant über den Kontaktrand verteilt sind. Sie erstrecken sich, wie insbesondere in Fig. 6 zu erkennen, derart über den Kontaktrand des jeweiligen Schalenteils (nach unten in Fig. 6), dass sie sich bei zusammengesetzter Schale (vgl. Fig. 7) an dem jeweils anderen Schalenteil innenseitig formschlüssig abstützen, und erhöhen auf diese Weise gleichermaßen die Formstabilität der Schale und die Festigkeit der Schalenteilverbindung.

Im Gegensatz zur ersten Ausführung wird der Innenkörper 4 bei der dritten Ausführung beidseitig durch jeweils drei durch Zwischenräume voneinander beanstandete Vorsprünge 3A.1, 3A.2 und 3A.3 bzw. 3B.1, 3B.2 mit Spiel festgelegt. Die Längsschlitzung durch die Zwischenräume zwischen den voneinander beanstandeten Vorsprüngen ermöglicht eine elastische Spreizung der Vorsprünge, um unterschiedliche thermische Ausdehnungen von Schale, Innenhohlkörper und eingefüllter Flüssigkeit zu kompensieren, und erleichtert ein Durchströmen.

Zur Verstärkung weisen die Vorsprünge 3A.1,..., 3B.2 innenseitig je eine Verstärkungsrippe 3.2 auf, die unterhalb des Bereichs der Festlegung des Innenhohlkörpers 4abgeschrägt endet und so, wie insbesondere in Fig. 6 erkennbar, die Innenhohlkugel 4 in Längsrichtung der Vorsprünge mit Spiel festlegt.

Im Gegensatz zur ersten Ausführung ist die Innenwand 3.1" als Teil der somit im Wesentlichen, bis auf die Öffnungen 2.2 geschlossen, sphärischen Außenkontur der Hohlkugel 1 ausgebildet, wie insbesondere die Zusammenschau der Fig. 1, 5 zeigt. Ein Anguss der im Kunststoffspritzguss urgeformten Schalenteile 1A, 1B ist im Bereich dieses Teils in Fig. 5, 7 erkennbar.

## Patentansprüche

1. Schwimmfähiger technischer Hohlkörper (1), insbesondere zum Abdecken offener Flüssigkeitsflächen, mit einer durch wenigstens zwei miteinander verbundene Schalenteile (1A, 1B) gebildeten Schale, die wenigstens eine Öffnung (2.2) zur Befüllung des Schaleninneren mit Flüssigkeit aufweist und in der wenigstens ein fluid-, insbesondere luftdichter Innenhohlkörper (4; 4') angeordnet ist, wobei die Schalenteilen (1A, 1B) mittels wenigstens einer Rastverbindung (2A - 2D) miteinander verbunden sind, **dadurch gekennzeichnet, dass**, wenn der Hohlkörper (1) mehre Rastverbindungen (2A - 2D) aufweist, sie vorzugsweise äquidistant über einen Umfang der Schalenteile (1A, 1A) verteilt sind, und dass die wenigstens eine Rastverbindung (2A - 2D) einen Rastvorsprung und eine die Schale durchgehende Aussparung, in welche der Rastvorsprung eingreift, aufweist, wobei die Aussparung (2.2) so groß ist, dass sie auch bei geschlossener Rastverbindung (2A - 2D) die wenigstens eine Öffnung (2.2) zur Befüllung des Schaleninneren mit Flüssigkeit bildet.

2. Hohlkörper nach Anspruch 1, **dadurch gekennzeichnet, dass** miteinander verbundene Schalenteilen (1A, 1B) wenigstens im Wesentlichen identisch ausgebildet sind.

3. Hohlkörper nach einem der vorhergehenden Ansprüche, **dadurch gekennzeichnet, dass** ein Innenhohlkörper (4') integral mit der Schale ausgebildet ist.

4. Hohlkörper nach einem der vorhergehenden Ansprüche, **dadurch gekennzeichnet, dass** die Schale und/oder ein Innenhohlkörper wenigstens im Wesentlichen sphärisch ausgebildet sind.

5. Hohlkörper nach einem der vorhergehenden Ansprüche, **dadurch gekennzeichnet, dass** die Schale und/oder ein Innenhohlkörper aus einem Kunststoff, insbesondere Polyethylen hergestellt sind.

6. Hohlkörper nach einem der vorhergehenden Ansprüche, **dadurch gekennzeichnet, dass** der bzw. die im Schaleninneren angeordnete(n) Innenhohlkörper und die Schale so aufeinander abgestimmt sind, dass der auf einer offenen Flüssigkeitsflächeschwimmende Hohlkörper einen vorgegebenen Auftrieb aufweist.

7. Hohlkörper nach einem der vorhergehenden Ansprüche, **dadurch gekennzeichnet, dass** er wenigstens eine Verstärkungsrippe (5A, 5B, 3.2) aufweist.

8. Hohlkörper nach einem der vorhergehenden Ansprüche, **dadurch gekennzeichnet, dass** ein von der Schale separat ausgebildeter Innenhohlkörper (4) durch wenigstens einen innenseitig an der Schale und/oder einen außenseitig am Innenhohlkörper ausgebildeten Vorsprung (3A, 3B; 3A.1 - 3A.3, 3B.1, 3B.2) an der Schale festgelegt ist.

9. Verfahren zur Herstellung eines schwimmfähigen technischen Hohlkörpers (1) nach einem der vorhergehenden Ansprüche mit den Schritten:
Herstellen, insbesondere Urformen, der Schalenteile (1A, 1B);
Verbinden, insbesondere Verrasten, der Schalenteile miteinander;
Befüllen des Hohlkörperinneren mit Flüssigkeit durch die wenigstens eine Öffnung (2.2), insbesondere durch Platzieren des Hohlkörpers auf einer offenen Flüssigkeitsfläche,
wobei ein integral mit der Schale ausgebildeter Innenhohlkörper (4') durch das Verbinden der Schalenteile miteinander hergestellt wird; und/oder ein separat ausgebildeter Innenhohlkörper (4) vor dem Verbinden der Schalenteile miteinander in diese eingebracht wird.

## Claims

1. A floating technical hollow body (1), particularly for covering open liquid surfaces, comprising a shell composed of at least two interconnected shell parts (1A, 1B) which has at least one opening (2.2) for filling the shell interior with fluid and in which at least one fluid-tight, in particular air-tight, inner hollow body (4; 4 ') is arranged, wherein the shell parts (1A, 1B) are joined together by at least one snap-in connection (2A - 2D), **characterized in that** when the hollow body (1) has multiple snap-in connections (2A - 2D), they are preferably equidistantly distributed over a circumference of the shell parts (1A, 1A) and that the at least one snap-in connection (2A - 2D) comprises a catch projection and a continuous notch through the shell into which the catch projection engages, wherein the notch (2.2) is large enough such that even when the snap-in connection (2A - 2D) is closed, it forms the at least one opening (2.2) for filling the shell interior with fluid.

2. The hollow body according to claim 1, **characterized in that** interconnected shell parts (1A, 1B) are formed at least substantially identical.

3. The hollow body according to one of the preceding claims, **characterized in that** an inner hollow body (4') is formed integral with the shell.

4. The hollow body according to one of the preceding claims, **characterized in that** the shell and/or an inner hollow body are formed at least substantially spherical.

5. The hollow body according to one of the preceding claims, **characterized in that** the shell and/or an inner hollow body is made of a plastic, particularly polyethylene.

6. The hollow body according to one of the preceding claims, **characterized in that** the one or more inner hollow bodies arranged in the interior of the shell and the shell are coordinated such that the hollow body has a predetermined buoyancy when floating on an open liquid surface.

7. The hollow body according to one of the preceding claims, **characterized in that** same comprises at least one stiffener (5A, 5B, 3.2).

8. The hollow body according to one of the preceding claims, **characterized in that** an inner hollow body (4) formed separately from the shell is secured to the shell by at least one projection (3A, 3B; 3A.1 - 3A.3, 3B.1, 3B.2) formed on the inside of the shell and/or on the outside of the inner hollow body.

9. A method for manufacturing a floating technical hollow body (1) according to one of the preceding claims, comprising the steps:
Manufacturing the shell parts (1A, 1B); in particular pre-molding;
Connecting the shell parts together, in particular by snap-in mechanism;
Filling the hollow body interior with fluid through the at least one opening (2.2), in particular by placing the hollow body onto an open liquid surface,
wherein an inner hollow body (4') formed integral with the shell is formed by connecting the shell parts together; and/or
a separately formed inner hollow body (4) is introduced prior to connecting the shell parts together.

## Revendications

1. Corps creux (1) technique flottant, en particulier servant à recouvrir des surfaces de liquide ouvertes, avec une coquille formée par au moins deux parties de coquille (1A, 1B) reliées entre elles, qui présente au moins une ouverture (2.2) servant à remplir de liquide l'intérieur de coquille et dans laquelle au moins un corps creux intérieur (4 ; 4') étanche aux fluides, en particulier étanche à l'air, est disposé, dans lequel les parties de coque (1A, 1B) sont reliées entre elles au moyen d'au moins une liaison par enclenchement (2A - 2D), **caractérisé en ce que**, quand le corps creux (1) présente plusieurs liaisons par enclenchement (2A - 2D), elles sont réparties de préférence de manière équidistante sur une périphérie des parties de coque (1A, 1A), et que l'au moins une liaison par enclenchement (2A - 2D) présente une partie faisant saillie d'enclenchement et un évidement traversant la coquille, avec lequel la partie faisait saillie d'enclenchement vient en prise, dans lequel l'évidement (2.2) est si grand qu'il forme également lorsque la liaison par enclenchement (2A - 2D) est fermée l'au moins une ouverture (2.2) servant à remplir de liquide l'intérieur de coquille.

2. Corps creux selon la revendication 1, **caractérisé en ce que** des parties de coquille (1A, 1B) reliées entre elles sont réalisées au moins de manière sensiblement identique.

3. Corps creux selon l'une quelconque des revendications précédentes, **caractérisé en ce qu'**un corps creux intérieur (4') est réalisé intégralement avec la coquille.

4. Corps creux selon l'une quelconque des revendications précédentes, **caractérisé en ce que** la coquille et/ou un corps creux intérieur sont réalisés au moins de manière sensiblement sphérique.

5. Corps creux selon l'une quelconque des revendications précédentes, **caractérisé en ce que** la coquille et/ou un corps creux intérieur sont fabriqués à partir d'une matière plastique, en particulier à partir de polyéthylène.

6. Corps creux selon l'une quelconque des revendications précédentes, **caractérisé en ce que** le ou les corps creux intérieurs disposés dans l'intérieur de coquille et la coquille sont adaptés les uns aux autres de telle sorte que le corps creux flottant sur une surface de liquide ouverte présente une flottabilité prédéfinie.

7. Corps creux selon l'une quelconque des revendications précédentes, **caractérisé en ce qu'**il présente au moins une nervure de renforcement (5A, 5B, 3.2).

8. Corps creux selon l'une quelconque des revendications précédentes, **caractérisé en ce qu'**un corps creux intérieur (4) réalisé séparément de la coquille est fixé au niveau de la coquille par au moins une partie faisant saillie réalisée côté intérieur au niveau de la coquille et/ou une partie faisant saillie (3A, 3B ; 3A.1 - 3A.3, 3B.1, 3B.2) réalisée côté extérieur au niveau du corps creux intérieur.

9. Procédé servant à fabriquer un corps creux (1) technique flottant selon l'une quelconque des revendications précédentes, avec les étapes :
de fabrication, en particulier de mise en forme, des parties de coquille (1A, 1B) ;
de liaison, en particulier d'enclenchement, des parties de coquille entre elles ;
de remplissage de l'intérieur de corps creux de liquide par l'au moins une ouverture (2.2), en particulier en plaçant le corps creux sur une surface de liquide ouverte, dans lequel un corps creux intérieur (4') réalisé intégralement avec la coquille est fabriqué par la liaison des parties de coquille entre elles ; et/ou un corps creux intérieur (4) réalisé séparément est introduit dans les parties de coquille avant la liaison de ces dernières entre elles.
